# EUROPEAN PATENT SPECIFICATION

(11) **EP 1 299 004 B1**
(45) Date of publication and mention of the grant of the patent: **21.04.2004**
(21) Application number: 01945820.7
(22) Date of filing: 06.04.2001
(51) Int. Cl.: A23C 19/16, A23P 1/08, A23L 1/317

(54) **BIO-DEGRADABLE COATING COMPOSITION FOR FOOD AND FOOD INGREDIENTS, IN PARTICULAR CHEESE**
BIOLOGISCH ABBAUBARE BESCHICHTUNGSZUSAMMENSETZUNG FÜR NAHRUNGSMITTEL UND NAHRUNGSMITTELBESTANDTEILE, INSBESONDERE KÄSE
COMPOSITION D'ENROBAGE BIODEGRADABLE POUR ALIMENTS ET INGREDIENTS ALIMENTAIRES, EN PARTICULIER DU FROMAGE

(30) Priority: 07.04.2000 NL 1014877
(43) Date of publication of application: 09.04.2003
(73) Proprietor: CSK Food Enrichment B.V., 8901 BA Leeuwarden (NL)
(72) Inventor: VAN MIL, Petrus, Jacobus, Johannes, Marie, 3584 ZT Utrecht (NL); KOSTERS, Hendrik, Albertus, 6713 BP Ede (NL); VAN DER HOVEN, Gerbrand, Antonius, 5404 PN Uden (NL); SMEGEN, Jantje, 6531 TB Nijmegen (NL)
(74) Representative: Huygens, Arthur Victor
(86) International application number: PCT/NL2001/000466
(87) International publication number: WO 2001/080658

(56) References cited:
- EP-A- 0 465 801
- EP-A- 0 513 922
- EP-A- 0 594 258
- EP-A- 0 816 561
- NL-A- 9 201 710
- US-A- 5 543 164
- BANERJEE R ET AL: "FUNCTIONAL PROPERTIES OF EDIBLE FILMS USING WHEY PROTEIN CONCENTRATE" JOURNAL OF DAIRY SCIENCE, AMERICAN DAIRY SCIENCE ASSOCIATION. CHAMPAIGN, ILLINOIS, US, vol. 78, no. 8, 1 August 1995 (1995-08-01), pages 1673-1683, XP000533326 ISSN: 0022-0302
- DATABASE WPI Section Ch, Week 198321 Derwent Publications Ltd., London, GB; Class D13, AN 1983-50086K XP002156542 & JP 58 063374 A (ASAHI DENKA KOGYO KK), 15 April 1983 (1983-04-15)

## Description

The present invention relates to a bio-degradable composition for coating food and food ingredients, in particular cheese.

Dutch Patent Application No. 9201710 discloses a cheese coating for semi-hard and hard cheese in the form of a polymeric layer, where the polymer is an edible, water-soluble and biologically degradable biopolymer, in particular a milk protein, viz. casein, a caseinate, or whey protein. Caseinates such as sodium caseinate or calcium caseïnate are mentioned as preferred polymers, The cheese coating further comprises an optional plasticizer, such as glycerol, sorbitol or xylitol, to improve its flexibility.

Although such a cheese coating has certain advantages relative to cheese coatings which apply a plastic dispersion as the polymer, for example vinyl acetate-dibutyl maleinate copolymer (e.g. in CESKA®, a product of CSK food enrichment BV, at Leeuwarden, the Netherlands), also several drawbacks appear to exist in actual practice. In particular the oxygen and water permeability of the bio-degradable composition was found to be greater than in compositions with a plastic dispersion.

Dutch Patent Application No. 9201820 describes an edible emulsion for the coating of foodstuff, such as cheese or sausages, which comprises 60-80 wt.% of water, 2-25 wt.% of oil or fat, 5-25 wt.% of protein and 0,1-3 wt.% of melt salt. The protein to be used which serves as an emulsifying agent is, according to the description, for example a milk protein or soy protein. In particular casein proteins are mentioned. The protein/fat ratio in the emulsion is usually, between 2:1 and 1:2. No mention is made of the use of plasticizers.

U.S. Patent No. 5,543,164 discloses a method for preparing water-insoluble, edible coatings and - in particular - films for food items, wherein a denatured sugar-free protein solution is applied in a amount of 5 to 20 wt.%. The examples are illustrated by whey protein isolate, which substance contains more than 95% protein by definition. The films and the coating compositions may also contain further ingredients, such as lipids and plasticizers.

European patent application EP-A-0 465 801 describes an edible moisture barrier coating for edible foodstuff materials, such as cake, chocolate, almonds, pizzas, pastas and vegetables, comprising from 70 to 95% of an aqueous solution of a protein isolate, 30 to 5% of a mixture of a saturated lipid having a melting point above 30°C, and an emulsifyer containing an amount of 5 to 30 wt.% based on the weight of the lipid, and the emulsifier containing one or more diacetyl tartaric esters of monoglycerides. As suitable protein isolates proteins are mentioned which are capable of forming a film, such as whey protein, caseinate, ovalbumin and milk protein. The composition may further contain a polyalcohol, such as glucose, or a polyglycol, such as glycerol, to prevent the protein from brittleness and the film from tearing. The use of such a composition for preserving cheese in neither disclosed nor suggested.

In the non-prepublished PCT Application WO 00/49899 and its corresponding Canadian Patent Application No. 2 298 109 which was also published after the priority date of the present patent application, bio-degradable coatings and films for food products are described, obtained from cross-linked mixtures of insoluble caseinate and whey protein. The compositions may also contain a plasticizer and/or a polysaccharide.

It has now been surprisingly found that new, very efficient compositions for the coating of foodstuff and in particular of cheese can be obtained which closely approach and even exceed the characteristics of cheese coatings in which a plastic dispersion is applied, and which are also edible and biologically degradable.

The invention is characterised in that said composition comprises:
(a) 3-35% globular protein, optionally supplemented with one or more additional film forming components
(b) 5-55% sugar
(c) 3-20% fat
(d) 5-15% plasticizer
(e) 0- 5% thickener
(f) 0-20% filler
(g) 0-5% fungicide,
wherein the dry solids content of the aqueous emulsion is 20-60%.

Preferably, a film forming or cross-linking protein is used as globular protein, i.e. a protein which forms sulphur bridges, generally by heating. Suitable proteins include, among other things, whey protein, ovalbumin, bovine serum albumin, and other mammal-derived proteins. The use of whey protein is most preferred. In addition, the composition may also contain one or more other suitable film forming components, which are well known to the man skilled in the art, such as pectin, gum arabic, gelatine, etc., to a weight percentage of about 15%.

It is important that the protein content in the whey protein used is sufficiently high. The concentration of whey protein in a WPC ("WPC" = whey protein concentrate) is usually expressed as the percentage of crude protein, taken on the dry solids, for example WPC-35, WPC-75 or WPC-95. The percentage of globular protein indicated above relates, as far as the whey protein is concerned, to any composition of whey protein, for example WPC-35 to WPC-95. A suitable amount of globular protein in the composition according to the invention is, for example, 15% WPC-35 or an amount equivalent therewith. Also whey proteins in combination with caseins or caseinates, the latter components may be present in an amount, for example, of 5%, taken on the whey protein, are very suitable as protein component in the composition according to the invention.

it is noted that commercially available WPC products generally also comprise a certain amount of lactose, varying from about 5 to 65 wt.%. The sugar component in the compositions according to the invention therefore is preferably lactose

Suitable fats are basically all edible and biologically degradable kinds of solid or liquid oil and fat from vegetable or animal origin, or mixtures thereof. Suitable solid oils or fats include, among other things, butter fat, coconut fat, palm fat, solid sunflower oil, or mixtures thereof. Suitable liquid oils include butter oil, arachis oil, soy oil, sunflower oil, or mixtures thereof. Also hydrophobic components may be comprised in the fat component, such as, for example, waxes and acetoglycerides. Preferably, butter fat or sunflower oil is used. Preferably, about 5-20% fat is used, in particular about 8%.

The plasticizers especially serve to improve the stretch characteristics of the films. Suitable plasticizers in the composition according to the invention are water and, in particular, polyols, such as glycerol, sorbitol or xylitol, preferably in a amount of 5-15%. Also other plasticizers can be used which are well known to a person skilled in the art and which can be selected at will without problems. Preferably sorbitol is used, in a amount of about 8%. The plasticizers reduce intermolecular forces between the polymers, thereby increasing the flexibility of the film. However, also the oxygen and water permeability appear to increase. The use of fat, as described above, and possible other ingredients, which will be discussed hereinafter, offer a an efficient solution for this problem.

Although the inventors do not wish to be bound to any theory which could explain the favourable properties of the composition according to the invention as compared to the prior art, it is likely that the difference between globular proteins, such as whey protein, and other (milk) proteins, such as caseins and caseinates, plays an essential role. Although the above-discussed Dutch Patent Applications Nos. 9201710 and 9201820 use to mention whey protein, casein and caseinate in one and the same breath as the protein to be used in the coating composition, in particular for cheese, it appears that the experimental work was only conducted with caseinate.

However, the inventors wish to point out that there is a big difference between whey protein on the one hand, and casein and caseinates on the other hand. Whey protein is a globular film forming protein which is cross-linked by sulfur bridges. The resulting film is somewhat brittle, which problem is solved by the addition of a plasticizer. It has been surprisingly found that fat and other additives render beneficial characteristics to the composition for coating food and food ingredients, and in particular for the coating of cheese. These beneficial characteristics relate in particular to the regulation of moisture and oxygen by the coating layer and therefore to the shelf-life of the coated product, as well as to the shel-life of the coating itself.

The role of casein and caseinates in the prior art compositions seems to be totally different. These proteins are not cross-linking under the conditions used and therefore their properties cannot be compared for the present purpose with whey protein. According to the description of NL 9201710 a protein aggregate is obtained by heating the caseinate with a plasticizer, whereas in NL 9201820 the caseinate serves as an emulsifying agent for the fat used. From these two references the composition according to the present invention and its good characteristics cannot be derived in any respect.

In a similar way the composition according to the invention is distinguished from compositions which have been disclosed in US 5,543,164. In the latter compositions the starting position is a denatured sugar-free protein, in particular whey protein isolate, whereas according to the present invention sugar just has to be present in the composition (5-55 wt.%), in particular to prevent brittleness. Moreover, the composition according to the invention originates from whey protein concentrate rather than from whey protein isolate.

The composition according to the present invention is further distinguished from the non-prepublished International Patent Application No. WO 00/49899 in that no cross-linked mixtures of whey protein and caseinate are used.

The composition according to the present invention may further contain a thickener, an amount of which in the order of 0,1-1,5% is generally sufficient. The thickeners can be selected from a wide variety of thickeners which are well known to a person skilled in the art, such as, for example, carboxymethyl cellulose (CMC), starch, CaCl₂, xanthan, pectin, alginate or caseinate. The composition may optionally contain a filler, depending on the specific use of the composition. Suitable fillers include talc and wax, but also other fillers which are known to a skilled person can be used without problems.

Also a fungicide, known to a skilled person, may be added to the composition, as desired. Suitable fungicides include, for example, natamycin and potassium sorbate. The effective and preferred amounts primarily depend on the specific substance to be used. Generally an amount up to 5% will be sufficient, in particular an amount in the range of 2-3%, and preferably about 2.5%. In the case of natamycin, however, the amounts to be used are usually considerably smaller and they may vary from about 1 to 5000 ppm (= 0.5 wt.%), preferably 1 to 500 ppm.

The pH of the composition is suitably in the range of 3.5-6.0. However, a pH of 5 or lower and in particular of about 4.0 is generally preferred, since the storage life of the composition is thereby increased. Such a pH can be advantageously adjusted by the addition of a suitable acid, for example hydrochloric acid and/or acetic acid, or using of a suitable buffer solution.

As a general rule, the components to be used for the composition according to the invention are selected in such a way that they do not interfere with each other, i.e. they will not adversely affect the characteristics of the composition. In actual practice this will hardly result in any significant restrictions.

If desired, the composition according to the invention may be given an appropriate shine after its application to the substrate and drying. The shine is caused by several factors, such as the kind and amount of fat used. The desired shine and the composition which is needed therefore, i.e. the additives, can be experimentally determined by a person skilled in the art without problems.

The composition according to the invention preferably has a viscosity (Brookfield LVT-4) of 20-200 Poise, more preferably 30-180 Poise and most preferably 50-150 Poise. The dry solids content generally is in the range of 20-60%, and preferably of 30-40%.

The composition of the invention can be prepared in any known manner. The preparation will cause no problems to a person skilled in the art. Preferably, the protein is first dissolved in water, generally at a temperature of 20-70°C, and preferably at about 30°C. The fat is then dried and the mixture homogenised at a temperature of 20-60°C, preferably 45°C and a pressure of in general 125/30 bar. Preferably a homogeniser is applied. The pH of the mixture may be unchanged, but is preferably adjusted to about 4.0. Subsequently the mixture is heated at 70-100°C for, say, 2-120 minutes, preferably at 80°C for about 110 minutes, and the composition is then cooled to a temperature which generally is in the range of 15-20°C, preferably with stirring. The cooling time generally is 0.5-24 hours, preferably in the order of 2-3 hours.

As an alternative embodiment for the preparation of the composition according to the invention the sequence of some steps can be changed. For example, the pH can be lowered immediately after the protein is dissolved in water and the solution is then heated before adding the fat and the mixture is homogenized and then cooled. Also, the pH can be adjusted after heating the total of the homogenized mixture.

The ready-for-use composition can be suitably stored for a longer period of time, from several days up to some 6 months, at a temperature of 10-20°C, preferably 10-15°C, and more preferably at 13°C, such as in a cheese store, before it is used.

The composition is generally applied to the desired product at a temperature of between 10-30°C, and the product is then dried. In general, the composition can be applied at any suitable point in time, as is the case now with state of the art compositions. The application may occur manually or mechanically in a way which is well known to a person skilled in the art. Drying generally occurs in the air, but may also be accelerated, if desired. Optionally an after-treatment of the product may take place, for example to reinforce its mechanical properties or to embellish its appearance. These steps are all known as such and will therefore not be discussed in detail.

The invention further relates to the use of a bio-degradable composition according to the invention, as described above, in the manufacturing or rather conservation of food and food ingredients. The composition according to the invention is in particular suitable for application as cheese coating on cheese, both on semi-hard and hard cheese, such as Gouda cheese, Maasdam cheese, Edam cheese, Emmental cheese, Gruyère cheese, Parmesan cheese and Cheddar cheese, and on soft cheese, such as most French cheese and 'schmier' cheese. The cheese on which the composition according to the invention is applied may be of any source, for example cheese made from cow milk, goat milk, sheep milk, etc., or mixtures thereof. The composition according to the invention can also be applied on other foodstuff, such as sausages, and food ingredients.

The invention is further illustrated by the following examples which are not to be construed as limiting the invention in any respect. The percentages in this specification are percentages by weight, unless stated otherwise.

### Example 1

The following compositions were prepared according to the first method described above and evaluated on drying time, shine, crackling and formation of moulds. CESKA® was also tested as a comparative example. The results are shown in Tables 1 a and 1b below.

**Table 1a**

| Coating compositions with 15% WPC-35 and 250 ppm of natamycin | | | |
|---|---|---|---|
| Composition | 1.1 | 1.2 | 1.3 |
| Whey protein | 15% WPC-35 | 15% WPC-35 | 15% WPC-35 |
| Fat | 8% butter fat | 8% butter fat | 8% sunflower oil |
| Plasticizer | 8% sorbitol | 8% sorbitol | 8% sorbitol |
| Thickener | 0.5 CMC | 0.5 CMC | 0.5 CMC |
| Filler | - | 15% talc | - |
| pH | 4.0 | 4.0 | 4.0 |
| Viscosity | 40 P | 50 P | 60 P |

**Table 1b**

| Activity on Gouda cheese after 65 days of storage (13°C, 85% RH) | | | | |
|---|---|---|---|---|
| Property | 1.1 | 1.2 | 1.3 | CESKA® (Comp. ex. 1) |
| Drying | moderate | reasonable | good | good |
| Shine | absent | absent | good | good |
| Crackling | absent | absent | absent | absent |
| Formation of moulds | absent | absent | absent | absent |

The following criteria were adopted for evaluating the activity of the cheese coating: drying of the cheese coating (not sticky anymore after a few hours); is the appearance of the cheese with its coating shiny; is the cheese coating tight, continuous with absence of crackling cracks and does no formation of moulds occur on the rind of the cheese.

The Examples indicate that the bio-degradable cheese coating in preferred composition 1.3 equals or even exceeds the reference CESKA® coating, since its appearance has a more natural shine. The difference in reduction by evaporation of the tested coatings relating to CESKA® is 1-2% at maximum after 65 days of storage.

### Example 2

This Example illustrates especially the limiting values of some parameters. Comparative Examples 2 and 3 are outside the definition of the invention (too high pH and no fat, respectively) and are therefore only included for comparative purposes. The results are shown in Tables 2a and 2b.

**Table 2a**

| Coating compositions with different amounts of whey protein and 250 ppm of natamycin | | | | |
|---|---|---|---|---|
| Composition | 2.1 | 2.2 | Comp. ex. 2 | Comp. ex. 3 |
| Whey protein | 20% WPC-35 | 25% WPC-35 | 15% WPC-75 | 15% WPC-75 |
| Fat | 8% butter fat | 15% butter fat | 8% butter fat | - |
| Plasticizer | 8% sorbitol | 8% sorbitol | 15% glycerol | 15% glycerol |
| Thickener | 0,5 CMC | 0,5 CMC | 1% CaCl₂ | 1% CaCl₂ |
| Filler | - | - | 15% inulin | 15% inulin |
| pH | 4.0 | 4.0 | 7.0 | 7.0 |
| Viscosity | 25 P | 50 P | 250 P | 25 P |

**Table 2b**

| Activity on Gouda cheese after 65 days of storage (13°C, 85% RH) | | | | | |
|---|---|---|---|---|---|
| Property | 2.1 | 2.2 | Comp. ex. 2 | Comp. ex. 3 | CESKA® (Comp. ex. 1) |
| Drying | good | fair | poor | moderate | good |
| Shine | absent | absent | good | some | good |
| Crackling | absent | some | some | some | absent |
| Formation of moulds | absent | absent | some | some | absent |

## Claims

1. A biologically active composition for the coating of foodstuff, in particular cheese, which comprises:
(a) 3-35% globular protein, optionally supplemented with one or more additional film forming components
(b) 5-55% sugar
(c) 3-20% fat
(d) 5-15% plasticizer
(e) 0-5% thickener
(f) 0-20% filler
(g) 0-5% fungicide,
wherein the dry solids content of the aqueous emulsion is 20-60%.

2. A composition as claimed in claim 1, wherein said composition is applied to cheese.

3. A composition as claimed in claim 2, wherein said globular protein is whey protein, ovalbumin, bovine serum albumin, or another mammal-derived protein, optionally in combination with one or more caseins and/or caseinates.

4. A composition as claimed in claim 3, wherein said globular protein is whey protein.

5. A composition as claimed in any one of claims 2 to 4, wherein said fat is selected from the group consisting of butter fat, coconut fat, palm fat, solid sunflower oil, butter oil, arachis oil, soy oil, sunflower oil, or mixtures of two or more of these fats.

6. A composition as claimed in any one of claims 2 to 5, which comprises:
(a) 15% WPC-35
(b) 8% sunflower oil
(c) 8% sorbitol
(d) 0.5% CMC, and optionally
(e) 250 ppm natamycin.

7. A composition as claimed in claim 6, wherein the dry solids content is 30-40%.

8. A composition as claimed in any one of claims 1 to 7 having a pH in the range of 3.5-6.0.

9. A composition as claimed in claim 8, wherein the pH is about 4.0.

10. Cheese provided with a cheese coating, wherein the cheese coating comprises a biologically degradable composition as defined in any one of claims 1-9.

11. Use of a biologically degradable composition for the coating of food and food ingredients as defined in any one of claims 1-9 in the manufacturing of food and food ingredients, in particular various kinds of cheese and sausage.

## Patentansprüche

1. Biologisch aktive Zusammensetzung zum Überziehen von Lebensmitteln, insbesondere von Käse, umfassend
(a) 3-35% globuläres Protein, gegebenenfalls ergänzt durch einen oder mehrere zusätzliche filmbildende Bestandteile
(b) 5-55% Zucker
(c) 3-20% Fett
(d) 5-15% Weichmacher
(e) 0-5% Verdickungsmittel
(f) 0-20% Füllstoff
(g) 0-5% Fungizid,
wobei der Gehalt an trockenen Feststoffen in der wässrigen Emulsion 20 bis 60% beträgt.

2. Zusammensetzung nach Anspruch 1, wobei die Zusammensetzung auf Käse aufgetragen wird.

3. Zusammensetzung nach Anspruch 2, wobei das globuläre Protein Molkeprotein, Ovalbumin, Rinderserumalbumin oder ein anderes von einem Säuger stammendes Protein ist, gegebenenfalls in Verbindung mit einem oder mehreren Caseinen und/oder Caseinaten.

4. Zusammensetzung nach Anspruch 3, wobei das globuläre Protein Molkeprotein ist.

5. Zusammensetzung nach einem der Ansprüche 2 bis 4, wobei das Fett ausgewählt ist aus der Gruppe bestehend aus Butterfett, Kokosfett, Palmfett, festem Sonnenblumenöl, Butteröl, Erdnussöl, Sojaöl, Sonnenblumenöl oder Gemischen aus zwei oder mehreren dieser Fette.

6. Zusammensetzung nach einem der Ansprüche 2 bis 5, umfassend:
(a) 15% WPC-35
(b) 8% Sonnenblumenöl
(c) 8% Sorbit
(d) 0,5% CMC und gegebenenfalls
(e) 250 ppm Natamycin.

7. Zusammensetzung nach Anspruch 6, wobei der Gehalt an trockenen Feststoffen 30 bis 40% beträgt.

8. Zusammensetzung nach einem der Ansprüche 1 bis 7, wobei der pH-Wert im Bereich von 3,5 bis 6,0 liegt.

9. Zusammensetzung nach Anspruch 8, wobei der pH-Wert etwa 4,0 beträgt.

10. Käse, der mit einem Käseüberzug versehen ist, wobei der Käseüberzug eine biologisch abbaubare Zusammensetzung wie in einem der Ansprüche 1 bis 9 definiert umfasst.

11. Verwendung einer biologisch abbaubaren Zusammensetzung für das Überziehen von Lebensmitteln und Lebensmittelinhaltstoffen wie in einem der Ansprüche 1 bis 9 definiert in der Herstellung von Lebensmitteln und Lebensmittelinhaltsstoffen, insbesondere verschienenen Arten von Käse und Wurst.

## Revendications

1. Composition biologiquement active pour l'enrobage d'un produit alimentaire, en particulier un fromage, comprenant :
(a) de 3 à 35 % de protéine globulaire, optionnellement supplémentée avec un ou plusieurs composants additionnels formant un film ;
(b) de 5 à 55 % de sucre ;
(c) de 3 à 20 % de matière grasse ;
(d) de 5 à 15 % de plastifiant;
(e) de 0 à 5 % d'épaississant
(f) de 0 à 20 % d'agent de remplissage
(g) de 0 à 5 % de fongicide
dans laquelle la teneur en matière sèche solide dans l'émulsion aqueuse est de 20 à 60 %.

2. Composition selon la revendication 1, dans laquelle ladite composition est appliquée sur du fromage.

3. Composition selon la revendication 2, dans laquelle ladite protéine globulaire est de la protéine de petit lait, de l'ovalbumine, de l'albumine de sérum bovin ou de l'albumine dérivée d'autres mammifères, optionnellement en combinaison avec une ou plusieurs caséines et/ou caséinates.

4. Composition selon la revendication 3, dans laquelle ladite protéine globulaire est une protéine de petit lait.

5. Composition selon l'une quelconque des revendications 2 à 4, dans laquelle ladite matière grasse est sélectionnée à partir du groupe constitué de la graisse butyrique, de la graisse de noix de coco, de la graisse de palme, de l'huile de tournesol solide, de l'huile de beurre, de l'huile d'arachide, de l'huile de soja, de l'huile de tournesol ou des mélanges de deux ou plus de ces matières grasses.

6. Composition selon l'une quelconque des revendications 2 à 5, comprenant :
(a) 15 % de WPC - 35
(b) 8 % d'huile de tournesol
(c) 8 % de sorbitol
(d) 0,5 % de CMC et optionnellement
(e) 250 ppm de natamycine.

7. Composition selon la revendication 6, dans laquelle la teneur en matières sèches solides est de 30 - 40 %.

8. Composition selon l'une quelconque des revendications 1 à 7, ayant un pH compris dans la gamme allant de 3,5 à 6,0.

9. Composition selon la revendication 8, dans laquelle le pH est d'environ 4,0.

10. Fromage pourvu d'un enrobage de fromage, dans lequel l'enrobage de fromage comprend une composition dégradable biologiquement telle que définie dans l'une quelconque des revendications 1 - 9.

11. Utilisation d'une composition dégradable biologiquement pour l'enrobage d'un aliment et d'ingrédients d'aliments comme défini selon l'une quelconque des revendications 1 - 9, pour la fabrication d'un aliment et d'ingrédients alimentaires, en particuliers différentes sortes de fromages et de saucisses.
